# EUROPÄISCHE PATENTSCHRIFT

(11) **EP 2 174 099 B1**
(45) Veröffentlichungstag und Bekanntmachung des Hinweises auf die Patenterteilung: **26.10.2011**
(21) Anmeldenummer: 08785010.3
(22) Anmeldetag: 24.07.2008
(51) Int. Cl.: G01F 1/06, G01F 15/14

(54) **VERBRAUCHSZÄHLER FÜR FLÜSSIGKEITEN**
LIQUID CONSUMPTION METER
COMPTEUR DE CONSOMMATION POUR DES LIQUIDES

(30) Priorität: 01.08.2007 DE 102007036117
(43) Veröffentlichungstag der Anmeldung: 14.04.2010
(73) Patentinhaber: Sensus Spectrum LLC, Raleigh, NC 27615 (US)
(72) Erfinder: CHU, Anh, Tuan, 67071 Ludwigshafen (DE)
(74) Vertreter: Patentanwälte Bitterich, Dr. Keller, Schwertfeger
(86) Internationale Anmeldenummer: PCT/EP2008/006057
(87) Internationale Veröffentlichungsnummer: WO 2009/015819

(56) Entgegenhaltungen:
- EP-A- 0 388 736
- DE-U1- 9 115 728
- GB-A- 2 025 535
- GB-A- 189 716 765

## Beschreibung

### Technisches Gebiet:

Die Erfindung betrifft Verbrauchszähler für Flüssigkeiten, umfassend ein Gehäuse mit einem Einlassstutzen und einem Auslassstutzen, eine Messkartusche, einzudichten in das Gehäuse und einen zwischen Gehäuse und Messkartusche verlegten Dichtring, der eine im Winkel zur Gehäuseachse gerichtete Ebene definiert und die Einlassseite von Gehäuse und Messkartusche gegen die Auslassseite abdichtet.

### Stand der Technik:

Verbrauchszähler für Fluide, beispielsweise Wasserverbrauchszähler, mit einem Gehäuse, in das eine die eigentlichen Messorgane enthaltende Messkammer auswechselbar eingesetzt wird, sind seit langem bekannt und in großen Stückzahlen handelsüblich. Damit kein ungemessenes Fluid vom Einlassstutzen zum Auslassstutzen gelangen kann, muss die Einlassseite mit Hilfe von einem oder mehreren Dichtringen gegen die Auslassseite abgedichtet werden.

Die DE 23 37 465 C3 offenbart einen Flüssigkeitszähler, der ein Gehäuse mit einem Einlassstutzen und einem Auslassstutzen, eine separate Messkammer und ein separates Umlenkelement besitzt. Das Umlenkelement lenkt das Messfluid vom Einlassstutzen zur Messkammer und von der Messkammer zum Auslassstutzen. Die Abdichtung zwischen Gehäuse und Umlenkelement erfolgt mit Hilfe zweier Dichtringe, die jeweils den Einlassstutzen und den Auslassstutzen umringen.

Die DE 32 47 376 C2 zeigt einen Wasserzähler, dessen Messkammer mit nur einem Dichtring in das Zählergehäuse eingedichtet ist. Dieser Dichtring umringt den Einlassstutzen; die Messkammer ist zum Auslassstutzen hin völlig offen.

Die DE-G 91 15 728 U1 offenbart einen Wasserzähler mit einem Gehäuse und einem in das Gehäuse eingesetzten Umlenkelement, welches das Messfluid vom

Die GB 16765 A offenbart einen Wasser-, Dampf- oder Gaszähler mit einer Messkartusche, die eine Trennwand umfasst, die zusammen mit der Gehäuseinnenwand die Einlassseite gegen die Auslassseite abdichtet.

Bei dem Wasserzähler gemäß der EP 0 388 736 A erfolgt die Abdichtung der Einlass- gegen die Auslassseite mit Hilfe eines Einsatzes, wobei ein Dichtring zwischen der Gehäuseinnenwand und dem Einsatz angeordnet ist. Die Messkartusche wird unter Verwendung eines weiteren Dichtringes auf den Einsatz aufgesetzt.

Beim Zähler gemäß der GB 2 025 535 A ist die die Einlassseite gegen die Auslassseite abgrenzende Trennwand ein integraler Bestandteil des Gehäuses. Die zylindrische Messkartusche wird in eine in dieser Trennwand eingeformte Aufnahme eingesetzt.

Einlassstutzen zur Messkammer und von der Messkammer zum Auslassstutzen lenkt. Um zu verhindern, dass ungemessenes Wasser von der Einlassseite zur Auslassseite des Wasserzählers gelangen kann, besitzt das Umlenkelement an seiner Außenseite einen schräg zur Gehäuseachse gerichteten Doppelflansch, in den ein Dichtring in Form eines O-Rings eingelegt ist. Der O-Ring steht über die Flansche über. Sobald das Umlenkelement in das Zählergehäuse eingesetzt wird, wird der O-Ring unter Druck gesetzt und dichtet das Umlenkelement gegen das Gehäuse ab, wobei aufgrund der schräg zur Gehäuseachse gerichteten Anordnung des O-Rings gleichzeitig die Einlassseite des Wasserzählers gegen die Auslassseite abgedichtet wird.

Diese Art der Abdichtung mit schräg zur Gehäuseachse verlegtem O-Ring hat verschiedene Nachteile. Da der O-Ring überstehen muss, damit er in der eingesetzten Position ausreichend gepresst wird, muss zum Einschieben von Umlenkelement und O-Ring eine relativ große Kraft aufgebracht werden. Aufgrund der schräg zur Gehäuseachse gerichteten Anordnung des O-Rings entstehen beim Einschieben Kräfte, die das Umlenkelement kippen lassen, wodurch sich die Einschiebekraft weiter erhöht. Beim Einschieben muss der O-Ring außerdem über die Öffnung des Einlassstutzens geschoben werden. Im Bereich der Öffnung weitet sich der O-Ring auf. Sobald er jedoch die untere Kante erreicht, wird er gequetscht. Dabei kann er beschädigt werden. In vielen Fällen ist diese Kante scharfkantig, wodurch die Gefahr der Beschädigung des O-Rings und der daraus folgenden Undichtigkeit weiter erhöht wird. Das ist unbefriedigend.

### Darstellung der Erfindung:

Der vorliegenden Erfindung liegt die Aufgabe zugrunde, einen Verbrauchszähler für Fluide gemäß der eingangs genannten Art anzugeben, der ohne Kraftaufwand und ohne Beschädigung des Dichtrings montiert werden kann.

Diese Aufgabe wird gemäß einer ersten Variante gelöst durch einen gattungsgemäßen Verbrauchszähler mit folgenden erfinderischen Merkmalen:
- die Messkartusche ist aus einem äußeren Kartuschenteil und einem inneren Kartuschenteil zusammensteckbar,
- das äußere Kartuschenteil besitzt ein Einsteckende,
- das äußere Kartuschenteil besitzt an seinem Einsteckende parallel zur Z-Ebene einen umlaufenden Flansch als Auflagefläche für den Dichtring,
- das innere Kartuschenteil besitzt parallel zur Z-Ebene ein Einsteckende,
- das innere Kartuschenteil besitzt parallel zur Z-Ebene einen umlaufenden Flansch, der vom Einsteckende zurückgesetzt ist, als Anlagefläche für den Dichtring,
- zwischen dem Einsteckende und dem Flansch des inneren Kartuschenteils befindet sich ein konischer Flächenabschnitt, der parallel zur Z-Ebene orientiert ist und dessen Radius von einem kleineren Wert am Einsteckende in Richtung Flansch zu einem größeren Wert zunimmt,
- der kleinere Radius ist so klein, dass das innere Kartuschenteil anfangs kräftearm bzw. kräftefrei in das Gehäuse, den Dichtring und das äußere Kartuschenteil einschiebbar ist,
- der konische Flächenabschnitt bewirkt eine zunehmende Pressung des Dichtrings zwischen den Kartuschenteilen und dem Gehäuse.

Die erfindungsgemäße erste Variante löst das Problem durch eine zweiteilige Ausbildung der Messkartusche und durch eine Dimensionierung von Gehäuse, Dichtring und Messkartusche derart, dass zuerst das äußere Kartuschenteil und der Dichtring kräftefrei in das Gehäuse und dann das innere Kartuschenteil zunächst kräftefrei, dann kräftearm in den Dichtring und das äußere Kartuschenteil eingeführt werden können. Etwaige Beschädigungen des Dichtrings an scharfen Gehäusekanten entfallen, da dieser sich bereits in seiner Einlass und Auslass trennenden Endposition befindet. Die die eigentliche Abdichtung bewirkende Pressung des Dichtrings zwischen Messkartusche und Gehäuse erfolgt erst am Ende der Montage durch den konischen Flächenabschnitt, der den radialen Spalt zwischen Messkartusche und Gehäuse so weit verringert, dass der O-Ring in die Dichtposition gepresst wird.

Dank des konischen Flächenabschnitts können auch größere Abmessungstoleranzen von Gehäuse und Messkartusche, wie sie bei der Kunststoff-Spritztechnik auftreten, aufgefangen werden, ohne dass der Dichtring bei der maximalen Druckdifferenz zwischen Einlass und Auslass seine Dichtfunktion verliert.

Gemäß einer vorteilhaften Weiterbildung der Erfindung besitzt das innere Kartuschenteil eine von dem konischen Flächenabschnitt zu seinem Flansch hin verlaufende erste Zylinderfläche. Diese erste Zylinderfläche ermöglicht einen Längentoleranzausgleich zwischen Gehäuse, Messkartusche und Dichtring, wobei der Toleranzbereichausgleich umso größer ausfällt, je breiter diese erste Zylinderfläche gewählt wird. Außerdem hält diese Zylinderfläche den Dichtring unter Pressdruck.

Zusätzlich kann das innere Kartuschenteil eine von dem konischen Flächenabschnitt zu seinem Einsteckende hin verlaufende zweite Zylinderfläche besitzen. Der Radius dieser zweiten Zylinderfläche ist kleiner als der Radius der ersten Zylinderfläche, so dass das innere Kartuschenteil zunächst kräftefrei in den Dichtring und das äußere Kartuschenteil eingeschoben werden kann.

Ergänzend kann die Innenwand des Gehäuses im Bereich der beiden Flansche auch eine zu den Flanschen parallele Schrägfläche besitzen, deren Radius in Einsteckrichtung von einem größeren Wert zu einem kleineren Wert abnimmt. Dank dieser Ausführungsform wird der Spalt zwischen Messkartusche und Gehäuse zusätzlich verringert, sobald der Dichtring den Bereich der Schrägfläche erreicht.

Die oben genannte Aufgabe wird gemäß einer zweiten Variante gelöst durch einen gattungsgemäßen Verbrauchszähler mit folgenden erfinderischen Merkmalen:
- die Messkartusche ist aus einem äußeren Kartuschenteil (10') und einem inneren Kartuschenteil zusammensteckbar,
- das innere Kartuschenteil besitzt ein Einsteckende,
- das innere Kartuschenteil besitzt parallel zur Z-Ebene einen umlaufenden Flansch, der vom Einsteckende zurückgesetzt ist, als Anlagefläche für den Dichtring,
- das äußere Kartuschenteil besitzt ein Einsteckende,
- das äußere Kartuschenteil besitzt an seinem Einsteckende parallel zur Z-Ebene einen umlaufenden Flansch, der vom Einsteckende zurückgesetzt ist, als Anlagefläche für den Dichtring,
- die Innenwand des äußeren Kartuschenteils besitzt zwischen Einsteckende und Flansch einen konischen Flächenabschnitt, der parallel zur Z-Ebene verläuft und dessen Radius in Einsteckrichtung von einem größeren Wert zu einem kleineren Wert abnimmt,
- der größere Radius ist so groß, dass das innere Kartuschenteil zunächst kräftearm bzw. kräftefrei in das Gehäuse, den Dichtring und das äußere Kartuschenteil einschiebbar ist,
- der konische Flächenabschnitt bewirkt eine zunehmende Pressung des Dichtrings zwischen den Kartuschenteilen und dem Gehäuse.

Die erfindungsgemäße zweite Variante löst die Aufgabe, indem die den Abstand im Bereich des O-Rings reduzierende Schrägfläche an der Innenwand des äußeren Kartuschenteils angebracht wird. Auch bei dieser Variante ist die Dimensionierung von Gehäuse, Dichtring und Messkartusche derart, dass der Dichtring und das innere Kartuschenteil kräftefrei bzw. kräftearm in das Gehäuse bzw. das äußere Kartuschenteil eingeführt werden können. Etwaige Beschädigungen des Dichtrings an scharfen Gehäusekanten entfallen, da sich der Dichtring bereits in seiner schräg zur Gehäuseachse gerichteten, Einlass und Auslass trennenden Position befindet.

Vorteilhafterweise ist in Einsteckrichtung vor dem konischen Flächenabschnitt eine erste Zylinderfläche mit größerem Radius vorgesehen. In der Regel handelt es sich dabei um die Innenwand des Gehäuses.

Gemäß einer Weiterbildung hierzu schließt sich in Einsteckrichtung an den konischen Flächenabschnitt eine zweite Zylinderfläche mit kleinerem Radius an. Diese Zylinderfläche ermöglicht einen Längentoleranzausgleich zwischen Gehäuse, Messkartusche und Dichtring, wobei der Toleranzbereich umso größer ausfällt, je breiter diese Zylinderfläche gewählt wird. Außerdem hält diese Zylinderfläche den Dichtring unter Pressdruck.

Gemäß einer bevorzugten Ausgestaltung sind Gehäuse und äußeres Kartuschenteil einstückig. Dadurch reduziert sich die Zahl der herzustellenden und zu montierenden Einzelteile auf ein Minimum.

Ergänzend kann das innere Kartuschenteil zwischen seinem Flansch und seinem Einsteckende auch einen zu den Flanschen parallel orientierten Flächenabschnitt besitzt, dessen Radius in Einsteckrichtung von einem kleineren Wert zu einem größeren Wert zunimmt. Dank dieser Ausführungsform wird der Spalt zwischen Messkartusche und Gehäuse zusätzlich verringert, sobald der Dichtring den Bereich der Schrägfläche erreicht.

Vorzugsweise dient bei beiden Varianten als Dichtring ein O-Ring.

Gehäuse und Messkartusche lassen sich besonders vorteilhaft aus Kunststoff herstellen.

### Kurze Beschreibung der Zeichnungen:

Anhand der Zeichnung soll die Erfindung in Form eines Ausführungsbeispiels näher erläutert werden. Es zeigen jeweils rein schematisch
- Fig. 1: einen Längsschnitt durch ein erstes Zählergehäuse mit eingesetzter Messkartusche als Sprengbild,
- Fig. 2: den Ausschnitt II aus Fig. 1 in vergrößertem Maßstab, wobei der Dichtring noch kräftefrei in dem Gehäuse sitzt,
- Fig. 3: den Ausschnitt III aus Fig. 1 in vergrößertem Maßstab, wobei der Dichtring sich in der Endposition befindet,
- Fig. 4: einen Längsschnitt durch ein zweites Zählergehäuse mit eingesetzter Messkartusche,
- Fig. 5: den Ausschnitt V aus Fig. 4 in vergrößertem Maßstab, wobei der Dichtring noch kräftefrei in dem Gehäuse sitzt, und
- Fig. 6: den Ausschnitt VI aus Fig. 4 in vergrößertem Maßstab, wobei der Dichtring sich in der Endposition befindet.

Wege zur Ausführung der Erfindung und gewerbliche Verwertbarkeit:

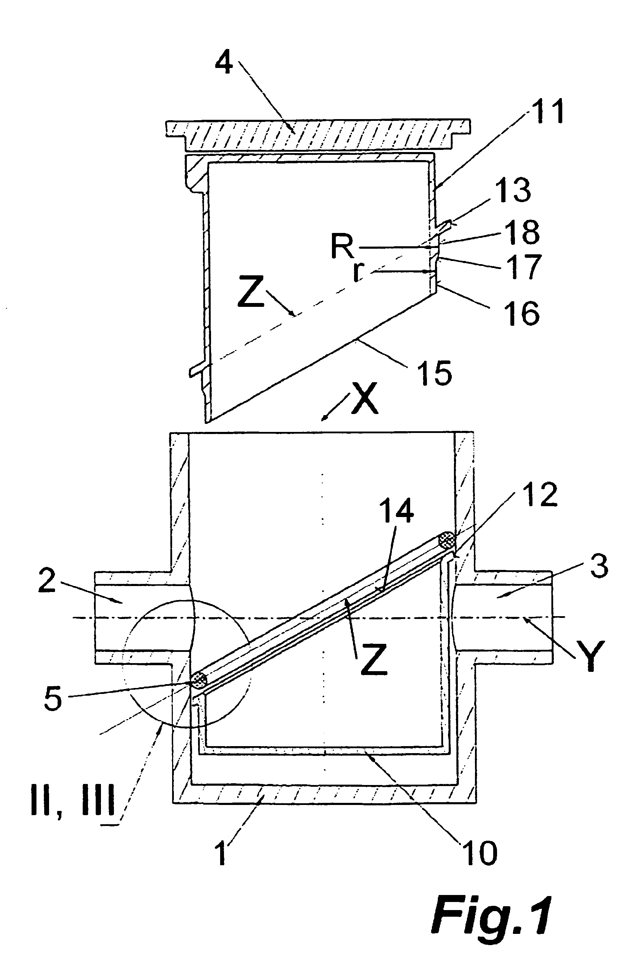

Fig. 1 zeigt rein schematisch und als Sprengbild einen Längsschnitt durch ein erstes Gehäuse 1 eines Verbrauchszählers für Flüssigkeiten. Das Gehäuse 1 besitzt einen Einlassstutzen 2 und auf der gegenüberliegenden Seite einen Auslassstutzen 3. Eine Seite des Gehäuses 1 ist offen und kann durch einen Verschlussdeckel 4 verschlossen werden.
Die Mittelachse des Gehäuses 1 ist mit "X", die dazu senkrechte, hier durch die Stutzen 2, 3 gezeichnete Achse mit "Y" bezeichnet. Ferner erkennt man eine im Winkel zur X-Achse liegende Ebene "Z".

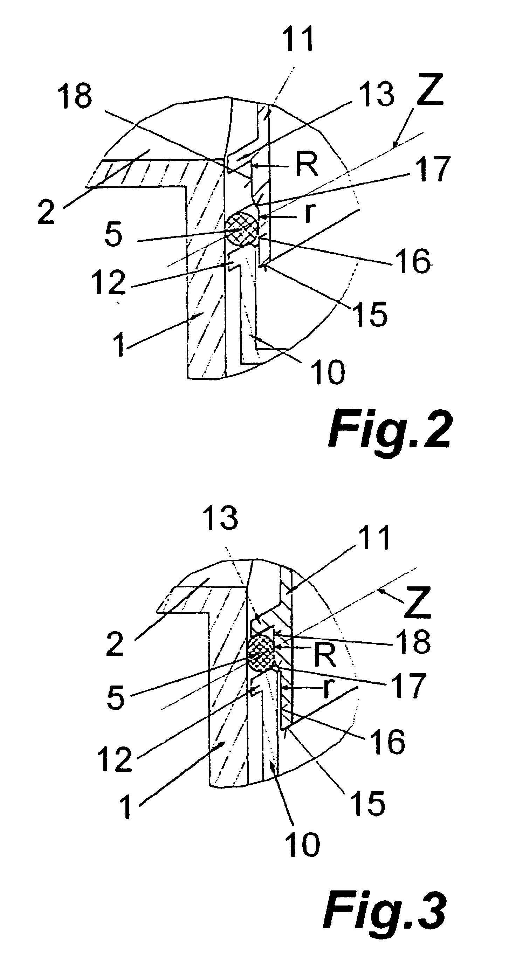

Im Inneren des Gehäuses 1 erkennt man eine Messkartusche, gebildet durch ein erstes äußeres Kartuschenteil 10 und ein einsteckbares zweites inneres Kartuschenteil 11. Jedes Kartuschenteil 10, 11 besitzt ein Einsteckende 14, 15 und einen parallel zur Ebene Z gerichteten, umlaufenden Flansch 12, 13. Auf dem Flansch 12 des äußeren Kartuschenteils 10 liegt kräftefrei ein Dichtring 5, bevorzugt ein O-Ring. Der Dichtring 5 wird die Messkartusche 10, 11 gegen das Gehäuse 1 und gleichzeitig die Einlassseite des Verbrauchszählers gegen seine Auslassseite abdichten, damit kein Fluid ungemessen passieren kann. Man vergleiche Fig. 3.

Oberhalb des Gehäuses 1 erkennt man das innere Kartuschenteil 11. An dessen Flansch 13 schließt sich zunächst eine erste Zylinderfläche 18 mit einem Radius R an, die in einen konischen Flächenabschnitt 17 übergeht, an den sich eine zweite Zylinderfläche 16 anschließt, die am Einsteckende 15 endet. Der Radius r der ist kleiner als der Radius R der ersten Zylinderfläche 18 und ist so gewählt, dass die zweite Zylinderfläche 16 praktisch kräftefrei in den Dichtring 5 und das äußere Kartuschenteil 10 eingeführt werden kann. Man vergleiche Fig. 2.

Der konische Flächenabschnitt 17 reduziert zunehmend den Spalt zwischen Messkartusche 10, 11 und Gehäuse 1, wodurch der Dichtring 5 geweitet und gepresst und seine Dichtfunktion aktiviert wird. Man vergleiche Fig. 3.

Es versteht sich, dass das innere Kartuschenteil 11 auch dann praktisch kräftefrei montiert werden kann, wenn der Dichtring 5 auf seine erste Zylinderfläche 16 aufgesteckt wird.

Fig. 2 zeigt in vergrößertem Maßstab den Ausschnitt II aus Fig. 1. Man erkennt das äußere Kartuschenteil 10 mit seinem umlaufenden Flansch 12. Man erkennt des Weiteren das innere Kartuschenteil 11 mit seinem umlaufenden Flansch 13. Das innere Kartuschenteil 11 ist so dimensioniert, dass es mit seinem Einsteckende 15 in das äußere Kartuschenteil 10 eingeschoben werden kann.

Im Bereich des Einsteckendes 15 erkennt man die zweite Zylinderfläche 16, deren Radius r so klein gewählt ist, dass das innere Kartuschenteil 11 entweder mit auf dem Flansch 12 aufgelegtem Dichtring 5 oder mit auf die Zylinderfläche 16 aufgesetztem Dichtring 5 kräftefrei bzw. kräftearm in das Gehäuse 1 eingeschoben werden kann.

Wie in Fig. 2 dargestellt, liegt der Dichtring 5 kräftefrei auf dem Flansch 12 des äußeren Kartuschenteils 10 auf. Er hat an dieser Stelle bereits seine Endposition im Gehäuse 1 erreicht.

Sobald nun das innere Kartuschenteil 11 weiter hineingeschoben wird, wird der Dichtring 5 durch den konischen Flächenabschnitt 17 gegen die Gehäuseinnenwand gepresst. Dieser konische Flächenabschnitt 17 bildet den Übergang von der ersten, dem Flansch 13 benachbarten Zylinderfläche 18 mit größerem Radius R zu der zweiten Zylinderfläche 16 mit kleinerem Radius r.

Fig. 3 zeigt den Endzustand. Der Dichtring 5 ist zwischen den beiden Kartuschenflanschen 12, 13 gehalten sowie zwischen der ersten Zylinderfläche 18 und der Innenwand des Gehäuses 1 gepresst und dichtet die Messkartusche 11 gegen das Gehäuse 1 und gleichzeitig die Einlassseite des Gehäuses 1 gegen seine Auslassseite ab. Da der Dichtring 5 erst ganz am Ende der Einschiebebewegung des inneren Kartuschenteils 11 durch den konischen Flächenabschnitt 17 geweitet wird, sind Beschädigungen während der Montage ausgeschlossen. Die Montage erfolgt weitgehend kräftefrei und deswegen beschädigungsfrei.

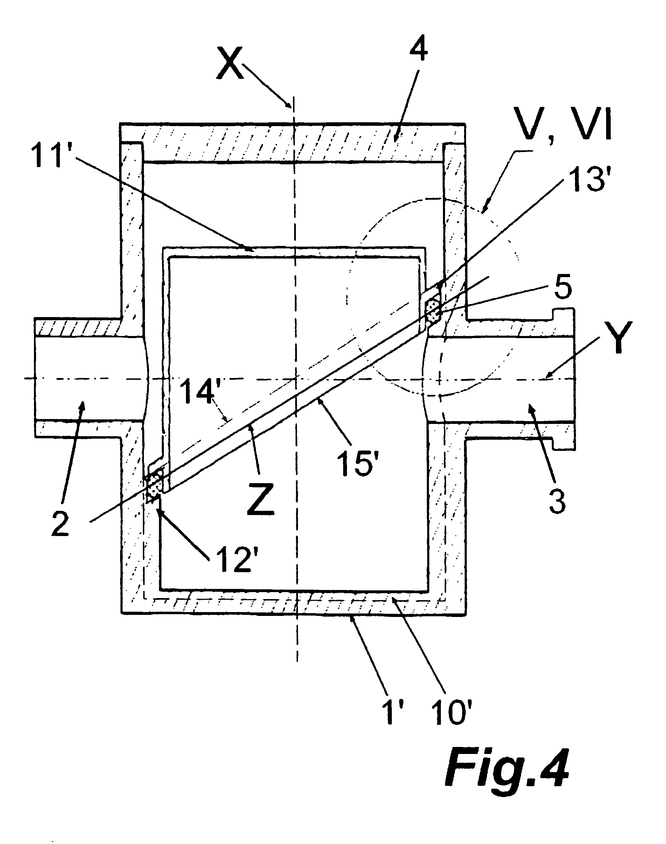

Fig. 4 zeigt rein schematisch einen Längsschnitt durch ein Gehäuse 1' eines zweiten Verbrauchszählers für Flüssigkeiten. Das Gehäuse 1' besitzt einen Einlassstutzen 2 und auf der gegenüberliegenden Seite einen Auslassstutzen 3. Eine Seite des Gehäuses 1' ist durch einen Verschlussdeckel 4 verschlossen.

Im Inneren des Gehäuses 1' erkennt man rein schematisch eine Messkartusche, gebildet durch ein mittels gestrichelter Linien angedeutetes äußeres Kartuschenteil 10' und ein einsteckbares inneres Kartuschenteil 11'. Jedes Kartuschenteil 10', 11' besitzt im Einsteckbereich einen parallel zur Ebene Z gerichteten, umlaufenden Flansch 12', 13'. Auf dem Flansch 12' des äußeren Kartuschenteils 10' liegt ein Dichtring 5, bevorzugt ein O-Ring. Der Dichtring 5 dichtet das Kartuschenteil 11, 11' gegen das Gehäuse 1' und somit die Einlassseite des Verbrauchszählers gegen seine Auslassseite ab, damit kein Fluid ungemessen passieren kann.

Wie Fig. 4 erkennen lässt, werden das Gehäuse 1' und das äußere Kartuschenteil 10' vorteilhaft einstückig aus Kunststoff hergestellt. Dadurch wird die Zahl der Einzelteile weiter reduziert.

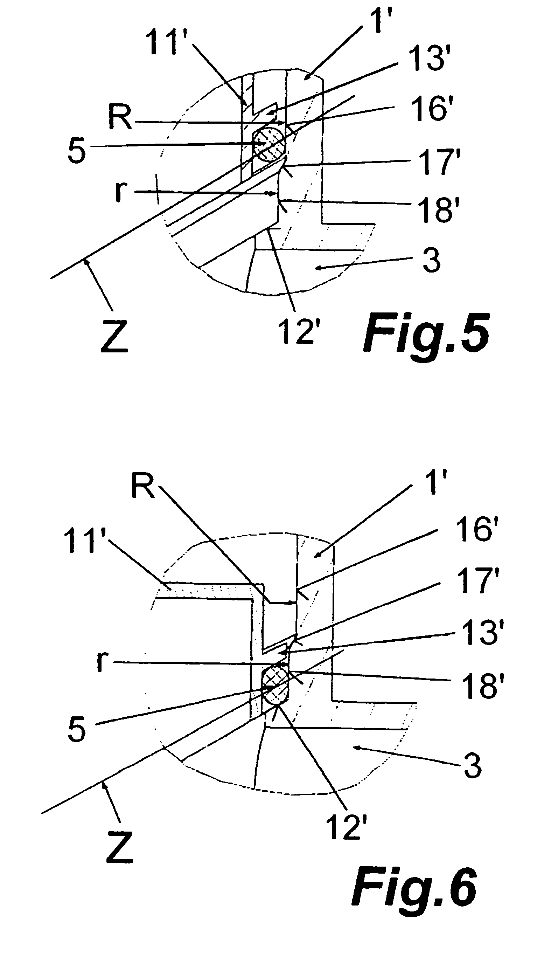

Fig. 5 zeigt in vergrößertem Maßstab den Ausschnitt V aus Fig. 4. Man erkennt das mit dem äußeren Kartuschenteil 10' einstückig hergestellte Gehäuse 1' mit seinem innen umlaufenden Flansch 12'. Man erkennt des Weiteren das innere Kartuschenteil 11' mit seinem außen umlaufenden Flansch 13'.

Im Bereich des Einsteckendes erkennt man die erste Zylinderfläche 16', deren Radius R so groß gewählt ist, dass das innere Kantuschenteil 11' mit aufgesetztem Dichtring 5 zunächst kräftefrei bzw. kräftearm eingeschoben werden kann. Die erste Zylinderfläche 16' ist hier mit der Gehäuseinnenwand identisch. Daran schließt sich ein konischer Flächenabschnitt 17' an, der in eine zweite Zylinderfläche 18' mit kleinerem Radius r übergeht. Die zweite Zylinderfläche 18' endet am Flansch 12'.

Wie in Fig. 5 dargestellt, liegt der Dichtring 5 bereits am Flansch 13' des inneren Kartuschenteils 11' an. Er hat an dieser Stelle bereits seine Endposition in Bezug auf das innere Kartuschenteil 11' erreicht. Sobald nun das innere Kartuschenteil 11' weiter eingeschoben wird, wird der Dichtring 5 durch den konischen Flächenabschnitt 17' gepresst.

Fig. 6 zeigt den Endzustand. Der Dichtring 5 ist zwischen den beiden Kartuschenflanschen 12', 13' gehalten und zwischen der zweiten Zylinderfläche 18' und der Außenwand des inneren Kartuschenteils 11' gepresst und dichtet die Einlassseite von Gehäuse 1' und Messkartusche gegen die Auslassseite ab. Da der Dichtring 5 erst ganz am Ende der Einschiebebewegung des inneren Kartuschenteils 11' durch den konischen Flächenabschnitt 17' und die zweite Zylinderfläche 18' gepresst wird, sind Beschädigungen während der Montage ausgeschlossen. Die Montage erfolgt praktisch kräftefrei und deswegen beschädigungsfrei.

## Patentansprüche

1. Verbrauchszähler für Flüssigkeiten, umfassend
- ein Gehäuse (1, 4) mit einem Einlassstutzen (2) und einem Auslassstutzen (3),
- eine Messkartusche, einzudichten in das Gehäuse (1, 4),
- und einen zwischen Gehäuse (1, 4) und Messkartusche verlegten Dichtring (5), der eine im Winkel zur Gehäusemittelachse (X) gerichtete Ebene (Z) definiert und die Einlassseite von Gehäuse (1, 4) und Messkartusche gegen die Auslassseite abdichtet,
**gekennzeichnet durch** die Merkmale:
- die Messkartusche ist aus einem äußeren Kartuschenteil (10) und einem in das äußere Kartuschenteil (10) einsteckbaren inneren Kartuschenteil (11) zusammensteckbar,
- das äußere Kartuschenteil (10) besitzt ein Einsteckende (14),
- das äußere Kartuschenteil (10) besitzt an seinem Einsteckende (14) parallel zur Ebene (Z) einen umlaufenden Flansch (12) als Auflagefläche für den Dichtring (5),
- das innere Kartuschenteil (11) besitzt parallel zur Ebene (Z) ein Einsteckende (15),
- das innere Kartuschenteil (11) besitzt parallel zur Ebene (Z) einen umlaufenden Flansch (13), der vom Einsteckende (15) zurückgesetzt ist, als Anlagefläche für den Dichtring (5),
- zwischen dem Einsteckende (15) und dem Flansch (13) des inneren Kartuschenteils (11) befindet sich ein konischer Flächenabschnitt (17), der parallel zur Ebene (Z) orientiert ist und dessen Radius von einem kleineren Wert (r) am Einsteckende (15) in Richtung Flansch (13) zu einem größeren Wert (R) zunimmt,
- der kleinere Radius (r) ist so klein, dass das innere Kartuschenteil (11) anfangs kräftearm bzw. kräftefrei in das Gehäuse (1), den Dichtring (5) und das äußere Kartuschenteil (10) einschiebbar ist,
- der konische Flächenabschnitt (17) bewirkt eine zunehmende Pressung des Dichtrings (5) zwischen dem Kartuschenteil (11) und dem Gehäuse (1).

2. Verbrauchszähler nach Anspruch 1, **gekennzeichnet durch** das Merkmal:
- das innere Kartuschenteil (11) besitzt eine von dem konischen Flächenabschnitt (17) zu seinem Flansch (13) hin verlaufende erste Zylinderfläche (18) mit dem größeren Radius (R).

3. Verbrauchszähler nach Anspruch 1 oder 2, **gekennzeichnet durch** das Merkmal:
- das innere Kartuschenteil (11) besitzt eine von dem konischen Flächenabschnitt (17) zu seinem Einsteckende (15) hin verlaufende zweite Zylinderfläche (16) mit dem kleineren Radius (r).

4. Verbrauchszähler nach Anspruch 1, 2 oder 3, **gekennzeichnet durch** das Merkmal:
- die Innenwand des Gehäuses (1) besitzt im Bereich der beiden Flansche (12, 13) auch einen zu der Ebene (Z) parallelen konischen Flächenabschnitt, dessen Radius in Einsteckrichtung von einem größeren Wert zu einem kleineren Wert abnimmt.

5. Verbrauchszähler für Flüssigkeiten, umfassend
- ein Gehäuse (1', 4) mit einem Einlassstutzen (2) und einem Auslassstutzen (3),
- eine Messkartusche, einzudichten in das Gehäuse (1', 4),
- und einen zwischen Gehäuse (1', 4) und Messkartusche verlegten Dichtring (5), der eine im Winkel zur Gehäusemittelachse (X) gerichtete Ebene (Z) definiert und die Einlassseite von Gehäuse (1', 4) und Messkartusche gegen die Auslassseite abdichtet,
**gekennzeichnet durch** die Merkmale:
- die Messkartusche ist aus einem äußeren Kartuschenteil (10') und einem in das äußere Kartuschenteil (10') einsteckbaren inneren Kartuschenteil (11') zusammensteckbar,
- das innere Kartuschenteil (11') besitzt ein Einsteckende (15'),
- das innere Kartuschenteil (11') besitzt parallel zur Ebene (Z) einen umlaufenden Flansch (13'), der vom Einsteckende (15') zurückgesetzt ist, als Anlagefläche für den Dichtring (5),
- das äußere Kartuschenteil (10') besitzt ein Einsteckende (14'),
- das äußere Kartuschenteil (10') besitzt an seinem Einsteckende (14') parallel zur Ebene (Z) einen umlaufenden Flansch (12'), der vom Einsteckende (14') zurückgesetzt ist, als Anlagefläche für den Dichtring (5),
- die Innenwand des äußeren Kartuschenteils (10') besitzt zwischen Einsteckende (14') und Flansch (12') einen konischen Flächenabschnitt (17'), der parallel zur Ebene (Z) orientiert ist und dessen Radius in Einsteckrichtung von einem größeren Wert (R) zu einem kleineren Wert (r) abnimmt,
- der größere Radius (R) ist so groß, dass das innere Kartuschenteil (11') zunächst kräftearm bzw. kräftefrei in das Gehäuse (1'), den Dichtring (5) und das äußere Kartuschenteil (10') einschiebbar ist,
- der konische Flächenabschnitt (17') bewirkt eine zunehmende Pressung des Dichtrings (5) zwischen den Kartuschenteilen (10', 11') und dem Gehäuse (1').

6. Verbrauchszähler nach Anspruch 5, **gekennzeichnet durch** das Merkmal:
- in Einsteckrichtung vor dem konischen Flächenabschnitt (17') ist eine erste Zylinderfläche (16') mit größerem Radius (R) vorgesehen.

7. Verbrauchszähler nach Anspruch 5, oder 6, **gekennzeichnet durch** das Merkmal:
- in Einsteckrichtung hinter dem konischen Flächenabschnitt (17') ist eine zweite Zylinderfläche (18') mit kleinerem Radius (r) vorgesehen.

8. Verbrauchszähler nach Anspruch 6 oder 7, **gekennzeichnet durch** das Merkmal:
- Gehäuse (1') und äußeres Kartuschenteil (10') sind einstückig.

9. Verbrauchszähler nach einem der Ansprüche 5 bis 8, **gekennzeichnet durch** das Merkmal:
- das innere Kartuschenteil (11') besitzt zwischen seinem Flansch (13') und seinem Einsteckende (15') auch einen zu der Ebene (Z) parallelen konischen Flächenabschnitt, dessen Radius in Einsteckrichtung von einem kleineren Wert zu einem größeren Wert zunimmt.

10. Verbrauchszähler nach einem der Ansprüche 1 bis 9, **gekennzeichnet durch** das Merkmal:
- der Dichtring (5) ist ein O-Ring.

11. Verbrauchszähler nach einem der Ansprüche 1 bis 9, **gekennzeichnet durch** das Merkmal:
- Gehäuse (1, 1', 4) und Messkartusche (10, 11; 10', 11') bestehen aus Kunststoff.

## Claims

1. A consumption meter for fluids, comprising
- a housing (1,4) with an inlet connector (2) and an outlet connector (3),
- a measuring cartridge, to be sealed in the housing (1,4),
- and a sealing ring (5) which is installed between the housing (1,4) and the measuring cartridge and which defines a plane (Z) directed at an angle to the housing centre axis (X) and seals the inlet side of the housing (1,4) and the measuring cartridge from the outlet side,
**characterised by** the features:
- the measuring cartridge can be assembled from an outer cartridge part (10) and an inner cartridge part (11) which is insertable into the outer cartridge part (10),
- the outer cartridge part (10) has an insert end (14),
- the outer cartridge part (10) has at its insert end (14) parallel to the plane (Z) a circumferential flange (12) as bearing surface for the sealing ring (5),
- the inner cartridge part (11) has an insert end (15) parallel to the plane (Z),
- the inner cartridge part (11) has parallel to the plane (Z) a circumferential flange (13), which is set back from the insert end (15), as bearing surface for the sealing ring (5),
- between the insert end (15) and the flange (13) of the inner cartridge part (11) there is disposed a conical surface portion (17) which is aligned parallel to the plane (Z) and whose radius increases from a lower value (r) at the insert end (15) towards the flange (13) to a higher value (R),
- the smaller radius (r) is so small that the inner cartridge part (11) is insertable initially with little effort or no effort into the housing (1), the sealing ring (5) and the outer cartridge part (10),
- the conical surface portion (17) causes increasing compression of the sealing ring (5) between the inner cartridge part (11) and the housing (1).

2. A consumption meter according to Claim 1, **characterised by** the feature:
- the inner cartridge part (11) has a first cylindrical surface (18) with the larger radius (R) extending from the conical surface portion (17) towards its flange (13).

3. A consumption meter according to Claim 1 or 2, **characterised by** the feature:
- the inner cartridge part (11) has a second cylindrical surface (16) with the smaller radius (r) extending from the conical surface portion (17) towards its insert end (15).

4. A consumption meter according to Claim 1,2 or 3, **characterised by** the feature:
- the inner wall of the housing (1) has in the vicinity of the two flanges (12,13) also a conical surface portion which is parallel to the plane (Z) and whose radius decreases in insertion direction from a higher value to a lower value.

5. A consumption meter for fluids, comprising
- a housing (1',4) with an inlet connector (2) and an outlet connector (3),
- a measuring cartridge, to be sealed in the housing (1',4),
- and a sealing ring (5) which is installed between the housing (1',4) and the measuring cartridge and which defines a plane (Z) directed at an angle to the housing centre axis (X) and seals the inlet side of the housing (1', 4) and the measuring cartridge from the outlet side,
**characterised by** the features:
- the measuring cartridge can be assembled from an outer cartridge part (10') and an inner cartridge part (11) which is insertable into the outer cartridge part (10'),
- the inner cartridge part (11') has an insert end (15'),
- the inner cartridge part (11') has parallel to the plane (Z) a circumferential flange (13'), which is set back from the insert end (15'), as bearing surface for the sealing ring (5),
- the outer cartridge part (10') has an insert end (14'),
- the outer cartridge part (10') has at its insert end (14') parallel to the plane (Z) a circumferential flange (12'), which is set back from the insert end (15), as bearing surface for the sealing ring (5),
- the inner wall of the outer cartridge part (10') has between the insert end (14') and the flange (12') a conical surface portion (17') which is aligned parallel to the plane (Z) and whose radius increases in insertion direction from a higher value (R) to a lower value (r),
- the larger radius (r) is so large that the inner cartridge part (11') is insertable initially with little effort or no effort into the housing (1'), the sealing ring (5) and the outer cartridge part (10'),
- the conical surface portion (17') causes increasing compression of the sealing ring (5) between the cartridge parts (10',11) and the housing (1').

6. A consumption meter according to Claim 5, **characterised by** the feature:
- a first cylindrical surface (16') with the larger radius (R) is provided in insertion direction in front of the conical surface portion (17').

7. A consumption meter according to Claim 5 or 6, **characterised by** the feature:
- a second cylindrical surface (18') with the smaller radius (r) is provided in insertion direction behind the conical surface portion (17').

8. A consumption meter according to Claim 6 or 7, **characterised by** the feature:
- housing (1') and outer cartridge part (10') are integral.

9. A consumption meter according to any one of Claims 5 to 8, **characterised by** the feature:
- the inner cartridge part (11') has between its flange (13') and its insert end (15') also a conical surface portion which is parallel to the plane (Z) and whose radius in insertion direction increases from a lower value to a higher value.

10. A consumption meter according to any one of Claims 1 to 9, **characterised by** the feature:
- the sealing ring (5) is an O-ring.

11. A consumption meter according to any one of Claims 1 to 9, **characterised by** the feature:
- the housing (1,1',4) and the measuring cartridge (10,11; 10',11') consist of plastics material.

## Revendications

1. Compteur de consommation pour des liquides, comprenant :
- un boîtier (1, 4) muni d'une tubulure d'entrée (2) et d'une tubulure de sortie (3),
- une cartouche de mesure, à insérer en étanchéité dans le boîtier (1, 4),
- et une bague d'étanchéité (5) posée entre le boîtier (1, 4) et la cartouche de mesure, bague qui définit un plan (Z) orienté sous un angle par rapport à l'axe médian (X) du boîtier et qui assure l'étanchéité du côté d'admission du boîtier (1, 4) et de la cartouche de mesure vis-à-vis du côté d'évacuation,
**caractérisé par** les caractéristiques suivantes :
- la cartouche de mesure peut être assemblée par emboîtement d'une partie extérieure de cartouche (10) et d'une partie intérieure de cartouche (11) pouvant être emboîtée dans la partie extérieure de cartouche (10),
- la partie extérieure de cartouche (10) possède une extrémité d'emboîtement (14),
- la partie extérieure de cartouche (10) possède à son extrémité d'emboîtement (14), parallèlement au plan (Z), une bride périphérique (12) comme surface d'appui pour la bague d'étanchéité (5),
- la partie intérieure de cartouche (11) possède, parallèlement au plan (Z), une extrémité d'emboîtement (15),
- la partie intérieure de cartouche (11) possède, parallèlement au plan (Z), une bride périphérique (13), qui est en retrait par rapport à l'extrémité d'emboîtement (15), comme surface d'appui pour la bague d'étanchéité (5),
- une portion de surface conique (17) se trouve entre l'extrémité d'emboîtement (15) et la bride (13) de la partie intérieure de cartouche (11), laquelle est orientée parallèlement au plan (Z) et dont le rayon augmente, en direction de la bride (13), d'une plus petite valeur (r) au niveau de l'extrémité d'emboîtement (15) à une plus grande valeur (R),
- le rayon plus petit (r) est suffisamment petit pour que la partie intérieure de cartouche (11) puisse être initialement enfoncée sans effort ou encore avec un faible effort dans le boîtier (1), la bague d'étanchéité (5) et la partie extérieure de cartouche (10),
- la portion de surface conique (17) produit une compression croissante de la bague d'étanchéité (5) entre la partie de cartouche (11) et le boîtier (1).

2. Compteur de consommation selon la revendication 1, **caractérisé par** la caractéristique suivante :
- la partie intérieure de cartouche (11) possède une première surface cylindrique (18) ayant le rayon plus grand (R), laquelle s'étend depuis la portion de surface conique (17) en direction de sa bride (13).

3. Compteur de consommation selon la revendication 1 ou 2, **caractérisé par** la caractéristique suivante :
- la partie intérieure de cartouche (11) possède une deuxième surface cylindrique (16) ayant le rayon plus petit (r), laquelle s'étend depuis la portion de surface conique (17) en direction de son extrémité d'emboîtement (15).

4. Compteur de consommation selon la revendication 1, 2 ou 3, **caractérisé par** la caractéristique suivante :
- la paroi intérieure du boîtier (1) possède, dans la région des deux brides (12, 13), également une portion de surface conique parallèle au plan (Z), dont le rayon diminue dans la direction d'emboîtement d'une plus grande valeur à une plus petite valeur.

5. Compteur de consommation pour des liquides, comprenant :
- un boîtier (1', 4) muni d'une tubulure d'entrée (2) et d'une tubulure de sortie (3),
- une cartouche de mesure, à insérer en étanchéité dans le boîtier (1', 4),
- et une bague d'étanchéité (5) posée entre le boîtier (1', 4) et la cartouche de mesure, bague qui définit un plan (Z) orienté sous un angle par rapport à l'axe médian (X) du boîtier et qui assure l'étanchéité du côté d'admission du boîtier (1', 4) et de la cartouche de mesure vis-à-vis du côté d'évacuation,
**caractérisé par** les caractéristiques suivantes :
- la cartouche de mesure peut être assemblée par emboîtement d'une partie extérieure de cartouche (10') et d'une partie intérieure de cartouche (11') pouvant être emboîtée dans la partie extérieure de cartouche (10'),
- la partie intérieure de cartouche (11') possède une extrémité d'emboîtement (15'),
- la partie intérieure de cartouche (11') possède, parallèlement au plan (Z), une bride périphérique (13'), qui est en retrait par rapport à l'extrémité d'emboîtement (15'), comme surface d'appui pour la bague d'étanchéité (5),
- la partie extérieure de cartouche (10') possède une extrémité d'emboîtement (14'),
- la partie extérieure de cartouche (10') possède à son extrémité d'emboîtement (14'), parallèlement au plan (Z), une bride périphérique (12'), qui est en retrait par rapport à l'extrémité d'emboîtement (14'), comme surface d'appui pour la bague d'étanchéité (5),
- la paroi intérieure de la partie extérieure de cartouche (10') possède, entre l'extrémité d'emboîtement (14') et la bride (12'), une portion de surface conique (17') qui est orientée parallèlement au plan (Z) et dont le rayon diminue dans la direction d'emboîtement d'une plus grande valeur (R) à une plus petite valeur (r),
- le rayon plus grand (R) est suffisamment grand pour que la partie intérieure de cartouche (11') puisse être initialement enfoncée sans effort ou encore avec un faible effort dans le boîtier (1'), la bague d'étanchéité (5) et la partie extérieure de cartouche (10'),
- la portion de surface conique (17') produit une compression croissante de la bague d'étanchéité (5) entre les parties de cartouche (10', 11') et le boîtier (1').

6. Compteur de consommation selon la revendication 5, **caractérisé par** la caractéristique suivante :
- une première surface cylindrique (16') ayant le rayon plus grand (R) est prévue avant la portion de surface conique (17') dans la direction d'emboîtement.

7. Compteur de consommation selon la revendication 5 ou 6, **caractérisé par** la caractéristique suivante :
- une deuxième surface cylindrique (18') ayant le rayon plus petit (r) est prévue après la portion de surface conique (17') dans la direction d'emboîtement.

8. Compteur de consommation selon la revendication 6 ou 7, **caractérisé par** la caractéristique suivante :
- le boîtier (1') et la partie extérieure de cartouche (10') sont d'un seul tenant.

9. Compteur de consommation selon l'une des revendications 5 à 8, **caractérisé par** la caractéristique suivante :
- la partie intérieure de cartouche (11') possède, entre sa bride (13') et son extrémité d'emboîtement (15'), également une portion de surface conique parallèle au plan (Z), dont le rayon augmente dans la direction d'emboîtement d'une plus petite valeur à une plus grande valeur.

10. Compteur de consommation selon l'une des revendications 1 à 9, **caractérisé par** la caractéristique suivante :
- la bague d'étanchéité (5) est un joint torique.

11. Compteur de consommation selon l'une des revendications 1 à 9, **caractérisé par** la caractéristique suivante :
- le boîtier (1, 1', 4) et la cartouche de mesure (10, 11 ; 10', 11') sont réalisés en matière plastique.
